(19)

**Europäisches Patentamt**

**European Patent Office**

**Office européen des brevets**

(11) **EP 3 455 860 B2**

(12) **NEUE EUROPÄISCHE PATENTSCHRIFT**
Nach dem Einspruchsverfahren

| | | | |
|---|---|---|---|
| (45) | Veröffentlichungstag und Bekanntmachung des Hinweises auf die Entscheidung über den Einspruch: **21.05.2025 Patentblatt 2025/21** | (51) | Internationale Patentklassifikation (IPC): **G21F 5/06** *(2006.01)* **C09K 21/00** *(2006.01)* |
| (45) | Hinweis auf die Patenterteilung: **18.03.2020 Patentblatt 2020/12** | (52) | Gemeinsame Patentklassifikation (CPC): **G21F 5/06;** C09K 21/00 |
| (21) | Anmeldenummer: **17723340.0** | (86) | Internationale Anmeldenummer: **PCT/EP2017/061200** |
| (22) | Anmeldetag: **10.05.2017** | (87) | Internationale Veröffentlichungsnummer: **WO 2017/194612 (16.11.2017 Gazette 2017/46)** |

(54) **ANORDNUNG ZUM TRANSPORT VON RADIOAKTIVEM MATERIAL SOWIE VERFAHREN ZUR ERHÖHUNG DES BRANDSCHUTZES EINER SOLCHEN ANORDNUNG**

ARRANGEMENT FOR TRANSPORTING RADIOACTIVE MATERIAL AND METHOD FOR INCREASING THE FIRE PROTECTION OF SUCH AN ARRANGEMENT

AGENCEMENT POUR TRANSPORTER DES MATÉRIAUX RADIOACTIFS ET PROCÉDÉ POUR RENFORCER LA PROTECTION CONTRE LE FEU D'UN TEL AGENCEMENT

| | | | |
|---|---|---|---|
| (84) | Benannte Vertragsstaaten: **AL AT BE BG CH CY CZ DE DK EE ES FI FR GB GR HR HU IE IS IT LI LT LU LV MC MK MT NL NO PL PT RO RS SE SI SK SM TR** | | • **FAVRE, Alexia 38950 Saint-Martin-le-Vinoux (FR)** • **HENNEBACH, Maik 60385 Frankfurt am Main (DE)** • **CLOPPENBORG, Tim 63225 Langen (DE)** |
| (30) | Priorität: **13.05.2016 DE 102016108947** | | |
| (43) | Veröffentlichungstag der Anmeldung: **20.03.2019 Patentblatt 2019/12** | (74) | Vertreter: **Stoffregen, Hans-Herbert Patentanwalt Friedrich-Ebert-Anlage 11b 63450 Hanau (DE)** |
| (73) | Patentinhaber: **Daher Nuclear Technologies GmbH 63457 Hanau (DE)** | | |
| (72) | Erfinder: • **HILBERT, Franz 65199 Wiesbaden (DE)** | (56) | Entgegenhaltungen: **EP-A1- 1 760 007 EP-A1- 3 226 249 DE-A1- 102013 200 546 DE-A1- 102013 200 546 RU-C1- 2 253 160 US-A- 3 391 280 US-A1- 2008 073 601** |

EP 3 455 860 B2

**Beschreibung**

Die Erfindung bezieht sich auf eine Anordnung zum Transport von radioaktivem Material, wie bestrahlten Kernbrennstoffen oder Uranhexafluorid, umfassend einen das Material aufnehmenden Behälter und diesen zumindest abschnittsweise umgebende Schutzeinrichtung, wie Stoßdämpfer oder den Behälter aufnehmenden Schutz- oder Außenbehälter, wobei vorzugsweise in der Schutzeinrichtung und/oder zwischen dieser und dem Behälter ein thermisch isolierendes erstes Material vorhanden ist.

Auch nimmt die Erfindung Bezug auf ein Verfahren zur Erhöhung des Brandschutzes einer Anordnung zum Transportieren von Material, insbesondere von radioaktivem Material, wie Uranhexafluorid, umfassend einen das Material aufnehmenden Behälter und diesen zumindest abschnittsweise umgebende Schutzeinrichtung, wobei vorzugsweise in der Schutzeinrichtung und/oder zwischen dieser und dem Behälter ein thermisch isolierendes erstes Material angeordnet wird.

Behälter zum Transport von radioaktiven Stoffen, die aufgrund der Radioaktivität des Inhalts und/oder die spaltbare Stoffe enthalten, müssen gemäß SSR 6 "Regulations for the Safe Transport of Radioactive Material" der IAEA sowie die Anforderungen der daraus abgeleiteten internationalen und nationalen Vorschriften sowohl mechanischen als auch thermischen Tests unterzogen werden.

Zu den mechanischen Tests gehören:

1. Eine Freifallprüfung aus einer Höhe, die von der Masse des Versandstücks abhängt (z. B. 1,2 m für eine Masse des Versandstücks bis 5000 kg) auf ein unnachgiebiges Fundament.
2. Ein Fall aus 9 m Höhe auf ein unnachgiebiges Fundament.
3. Ein Fall aus 1 m Höhe auf einen Stahlzylinder mit einem Durchmesser von 150 mm und einer Mindestlänge von 200 mm.

Ein thermischer Test sieht vor:
4. Eine Brandeinwirkung mit einer Dauer von 30 min und einer einhüllenden Flamme mit einer Temperatur von mindestens 800 °C mit definierten Anfangs- und Abkühlbedingungen.

Diese Anforderung gilt beispielsweise für Behälter zum Transport von bestrahlten Kernbrennstoffen (sowohl große Radioaktivität als auch spaltbarer Stoff), z. B. der Behälter NCS 45, und für Behälter zum Transport von angereichertem Uranhexafluorid (spaltbarer Stoff bei mehr als 1 Gew.-% Anreicherung an U-235), z. B. der Behälter DN30.

Behälter zum Transport von Kernbrennstoffen, z. B. der Behälter NCS 45, bestehen aus einem Behälterkörper aus Stahl und ggf. zusätzlich Blei zur Abschirmung der radioaktiven Strahlung. Zur Be- und Entladung besitzen die Behälter einen oder mehrere Deckel, die gegen den Behälter über Dichtungen in der Regel bestehend aus Elastomeren abgedichtet sind. Beim Transport sind die Deckel durch Stoßdämpfer geschützt, die das Deckelsystem sowohl vor den in Ziffern 1. - 3. beschriebenen mechanischen Beanspruchungen als auch vor der unter 4. beschriebenen thermischen Belastung schützen sollen. Dabei soll insbesondere der durch die mechanischen Anforderungen vorgeschädigte Stoßdämpfer einen ausreichenden Schutz vor der thermischen Belastung bieten und einen Anstieg der Temperaturen der Dichtungen auf unzulässige Werte verhindern.

Uranhexafluorid wird in zylinderförmigen Stahlbehältern transportiert. Diese Behälter sind in ISO 7195 "Packaging of Uranium Hexafluoride (UF6) for Transport" bzw. in ANSI N14.1 "Uranium Hexafluoride - Packaging for Transport" spezifiziert. Stahlbehälter für Uranhexafluorid mit einer Anreicherung von mehr als 1 Gew.-% Uran-235 in Uran, z. B. der Stahlbehälter 30B, sind beim Transport von einem Schutzbehälter umgeben, der die Einhaltung der o. g. Vorschriften erfüllen soll. Stahlbehälter, Schutzbehälter und der Inhalt bestehend aus Uranhexafluorid bilden im Sinne der Vorschriften das Versandstück, z. B. das Versandstück DN30.

Die zylinderförmigen Stahlbehälter sind an einem Ende mit einem Ventil zum Befüllen und Entleeren und am anderen Ende mit einem Stopfen, der nur zur Wartung der Zylinder entfernt wird, ausgestattet. Sowohl Ventil als auch Stopfen sind mit einem konischen Gewinde in den Zylinder eingeschraubt. Die Dichtwirkung wird mittels einer Zinnschicht erreicht, die auf Ventil und Stopfengewinde aufgebracht ist und die Bauteile beim Einschrauben gegen den Zylinder abdichtet. Bei der Erhitzungsprüfung dürfen die Temperaturen am Ventil- und Stopfengewinde nicht über die für das jeweilige Material festgelegte Grenztemperatur ansteigen, um eine Undichtigkeit zu vermeiden.

Ein entsprechender Behälter ist z.B. der EP 2 335 251 B1 zu entnehmen.

In der Regel bestehen die stoßdämpfenden und isolierenden Elemente der Behälter aus Holz und/oder technischen thermoplastischen Schäumen, z. B. PU-Schäumen. Durch die mechanischen Beanspruchungen wird in der Regel die Wirksamkeit des thermischen Schutzes verringert. Durch den Energieverzehr bei den mechanischen Beanspruchungen erfolgt eine Deformation und damit eine Verringerung der Schaumdicke sowie eine Veränderung der Wärmeleitfähigkeit. Ggf. können Bereiche aufreißen, so dass eine direkte Einwirkung der Flammen auf die Isolierung erfolgen kann. Des Weiteren kann eine exotherme pyrolytische Reaktion erfolgen, die beispielsweise durch Ausgasung von Zersetzungsprodukten zu einem zusätzlichen Wärmeeintrag in die zu schützenden Bereiche führt.

Derzeit realisierte Ausführungen von Stoßdämpfern für Behälter zum Transport von radioaktiven spaltbaren Stoffen weisen ein geschlossenes Stahlblechgehäuse mit innen liegenden stoßdämpfenden und thermisch isolierenden Elementen auf. Die stoßdämpfenden und thermischen Elemente bestehen bei schweren Behältern in der Regel aus Holz, da dieses Material sowohl ein sehr hohes Energieaufnahmevermögen hat als auch eine gute thermische Isolierwirkung. Die thermische Isolierung kann durch die mechanischen Einwirkungen in ihrer Funktion beeinträchtigt werden, insbesondere durch die Veränderung von Form und Ei-genschaften durch die mechanischen Krafteinwirkun-gen. Auch Verbrennung/Vergasung im Feuer führt zu einer Beeinträchtigung der thermischen Isolierung.

Derzeit eingesetzte zylinderförmige Stahlbehälter zum Transport von UF6 sind die Bauarten UX 30, MST 30 und COG-OP-30B. Allen Bauarten ist gemein, dass die Schutzverpackung aus einem zweige-teilten Stahlblechgehäuse mit innenliegender thermi-scher Isolierung besteht. Auch hier ist das wesentliche Merkmal im Hinblick auf die vorliegende Erfindung, dass die thermische Isolierung durch die mechanischen Einwirkungen in ihrer Funktion beeinträchtigt wird, insbesondere durch die Veränderung von Form und Eigenschaften durch die mechanischen Krafteinwirkungen. Verbrennung/Vergasung im Feuer führt gleichfalls zu einer negativen Beeinflussung.

Die US 2003/0052036 A1 bezieht sich auf einen Schutzcontainer, der eine innere Schale und eine äußere Schale aufweist, zwischen denen sich Materialien befinden, die im Falle einer Zerstörung der inneren Schale dazu führen, dass der Inhalt des Containers wirkungslos wird.

Gegenstand der DE 699 02 774 T2 ist ein zwei-eiliger Behälter, der eine Innen- und eine Außenhaut aufweist. Der Zwischenraum ist mit einem Material geringer Dichte gefüllt. Ein Abschirmtransport- bzw. Lagerbehälter nach der DE 40 04 037 C1 weist eine Brandschutzumhüllung auf.

Ein Transportbehälter nach der DE 1 514 623 A weist eine innere Abschirmung auf, die von zueinander beabstandeten Stahlmänteln umgeben ist, zwischen denen sich ein saugfähiger Wärmeisolator befindet. Gegenstand der RU 2 253 160 C1 ist eine Anordnung zum Transport radioaktiven Materials mit einem Innenbehälter und einem Außenbehälter, der innenseitig eine durch Wärmeeinwirkung aufschäumende Schicht aufweist.

Die DE 1 514 616 A bezieht sich auf einen Transportkasten oder -behälter für radioaktive Stoffe. Dabei ist ein Innenbehälter von einem Metallschutzmantel umgeben. Zwischen Innenbehälter und Metallschutzmantel ist hydratisiertes Calciumsulfat angeordnet.

Gegenstand der US 2008/0073601 A1 ist ein Transportbehälter, der aus einem Innen- und einem Außenbehälter besteht. Dabei kann der Außenbehälter mehrschichtig ausgebildet sein.

Die US 3 669 299 A bezieht sich auf einen Transportbehälter, der aus einem inneren und einem beanstandet zu diesem verlaufenden und von dem inneren Behälter nicht trennbaren äußeren Behälter besteht.

In den Zwischenraum wird ein Material eingefüllt, das einen mechanischen Schutz bei gleichzeitiger thermischer Isolierung bietet. Die Isolierung kann ein aufschäumendes Material enthalten.

Die Chinesischen Veröffentlichungen 204 760 052 bzw. 203 503 315 beschreiben Transportbehälter für radioaktive Stoffe, die mehrschalig ausgebildet sind.

Ein Transport- und Lagerbehälter aus Kunststoff ist aus der EP 1 760 007 A1 bekannt.

Eine Transportvorrichtung für einen radioaktives Material aufnehmenden Behälter, der mit Abstand von einem Hohlkörper umgeben ist, um eine Luftströmung zu ermöglichen, ist aus der US 3 391 280 A bekannt.

Der vorliegenden Erfindung liegt unter anderem die Aufgabe zugrunde, eine Anordnung und ein Verfahren der eingangs genannten Art so weiterzubilden, dass eine gewünschte thermisch isolierende Wirkung erzielt werden kann, insbesondere die bei mechanischen Einwirkungen auftretenden negativen Folgen bezüglich der thermischen Isolierung zu beheben bzw. zu kompensieren, ohne dass Änderungen an dem Behälter erfolgen.

Auch soll die Möglichkeit eröffnet werden, eine Wärmeübertragung auf den Behälter durch Strahlung oder Konvektion zumindest zu vermindern.

Nach einem weiteren Aspekt soll insbesondere im Bereich von Einbauten, wie Ventilen oder Stopfen, deren Funktion durch mechanische Belastungen beeinträchtigt werden können, in hinreichendem Umfang sichergestellt werden, dass eine Wärmebelastung reduziert wird, ohne dass die Gefahr einer zu Schäden führenden Krafteinleitung in die Elemente erfolgt.

Zur Lösung der Aufgabe wird anordnungsgemäß vorgeschlagen, dass zwischen dem Behälter und der lösbar mit dem Behälter verbundenen Schutzeinrichtung zumindest bereichsweise ein mit der Schutzein-richtung durch Hitzeeinwirkung aufschäumendes ther-misch isolierendes zweites Material vorhanden ist, wobei das zweite Material eine Beschichtung ist oder aus Platten oder Formstücken besteht, wobei das zweite Material außerhalb eines unmittelbaren Kontaktes zwischen dem Behälter und der Schutzeinrichtung nach dem Aufschäumen den Zwischenraum zwischen dem Behälter und der Schutzeinrichtung vollständig oder im Wesentlichen vollständig ausfüllt. Anstelle einer Beschichtung kommen erwähntermaßen auch Platten oder mit Formschluss aneinandergefügte Formstücke in Frage, die entsprechend der erfindungsgemäßen Lehre aus einem thermisch aktivierbaren thermisch isolierenden Material bestehen. Entsprechende Bauelemente können auch unter Schicht bzw. Beschichtung subsummiert werden.

Erfindungsgemäß wird ein thermisch aktivierbarer thermisch isolierender Schutz für Transportbehälter von radioaktiven Stoffen wie bestrahlten Kernbrennstoffen oder Uranhexafluorid vorgeschlagen, wobei im Falle eines Feuers durch Hitzeeinwirkung ein Aufschäumen erfolgt. Dabei werden Hohlräume zwischen Behälter und Schutzeinrichtung vollständig oder im Wesentlichen vollständig von dem aufgeschäumten zweiten Material ausgefüllt, so dass eine Wärmeübertragung von der Schutzeinrichtung zum Behälter hin durch Strahlung und Konvektion zumindest reduziert wird. Durch das aufgeschäumte zweite Material wird der Vorteil geschaffen, dass die Wärmeleitung durch das thermisch schlecht leitende aufgeschäumte zweite Material erfolgt bzw. im Wesentlichen erfolgt.

Das durch Wärmeeinwirkung aufschäumende, thermisch isolierende zweite Material geht von der Schutzeinrichtung aus. Es bedarf keiner Veränderung an dem das radioaktive Material aufnehmenden Behälter. Im Lager selbst weist der Behälter grundsätzlich die Schutzeinrichtung nicht auf. Soll der Behälter transportiert werden, ist es erforderlich, dass dieser von der Schutzeinrichtung, insbesondere einem zweiten Behälter aufgenommen wird bzw. stirnseitig Stoßdämpfer befestigt werden. Diese als Schutzeinrichtung zu bezeichnenden Elemente weisen das aufschäumende thermisch isolierende zweite Material auf. Dabei ist es gleichfalls nicht erforderlich, dass die Schutzeinrichtungen baulich verändert werden. Vielmehr wird insbesondere das isolierende zweite Material durch Kleben in gewünschten Bereichen der Schutzeinrichtung aufgebracht, die dem Behälter zugewandt sind.

Erfindungsgemäß ist das durch Wärmeeinwirkung aufschäumende, thermisch isolierende zweite Material mit der Schutzeinrichtung verbunden, die ihrerseits von dem Behälter lösbar ist. Die Schutzeinrichtung wird grundsätzlich entfernt, wenn der Behälter nicht transportiert wird und in einem Lager aufgestellt werden soll.

Das thermisch schlecht leitende bzw. thermisch isolierende zweite Material kann eine Wärmeleitfähigkeit $\lambda$ mit 2 W/mK $\geq \lambda \geq$ 0,05 W/mK oder sogar weniger als 0,05 W/mK aufweisen.

Erfindungsgemäß nutzt man aufschäumendes thermisch isolierendes Material, wie dieses auch als aufschäumendes Feuerschutzmittel auf Stahlbauteilen bekannt ist. Durch das Auftragen entsprechender Feuerschutzmittel auf Stahlbauteilen will man im Falle eines Feuers ein Versagen der Stahlbauteile im Rahmen der jeweiligen Feuerschutzklasse verhindern. Auch ist es bekannt, aufschäumende Feuerschutzisolierungen in beispielsweise Brandschutztüren einzubringen, die bei einem Brand entweder die Isolierwirkung der Tür erhöhen oder Spalte zwischen Tür und Rahmen durch Aufschäumen verschließen.

Es wird eine zusätzliche thermische Isolierung geschaffen, die zum einen die Verringerung der isolierenden Wirkung des thermisch isolierenden ersten Materials nach mechanischen Tests oder Beschädigung ausgleicht und zum anderen eine zusätzliche Isolierwirkung in den Spalten hervorruft, die montage- bzw. beladungsbedingt bzw. herstellungsbedingt auftreten. Dies gilt insbesondere für die Beladung eines Schutzbehälters mit einem zylinderförmigen Stahlbehälter.

In den Bereichen, in denen die Schutzeinrichtung, wie Außenbehälter oder Schutzbehälter, und der Innenbehälter aufeinanderliegen, ist ein entsprechendes zweites Material, insbesondere in Form einer Beschichtung, von Platten oder Formstücken, nicht vorhanden.

Durch den innenliegenden Verlauf des zweiten Materials, wie Beschichtung der Innenseite der Schutzeinrichtung, wie Stoßdämpfer oder Außen- oder Schutzbehälter, ist eine Beschädigung der Beschichtung während des Transports ausgeschlossen.

Die nach einem Feuerunfall über das aufgeschäumte Material erfolgende Verbindung der Schutzeinrichtung, wie Stoßdämpfer bzw. Schutz- oder Außenbehälter, mit dem zu schützenden Behälter hat keinerlei negative Auswirkungen.

Um jedoch sicherzustellen, dass auf die Bereiche, die bei hohen mechanischen Belastungen beschädigt werden können, eine unzulässige mechanische Einwirkung durch das aufschäumende zweite Material nicht auftreten kann, ist vorgesehen, dass in unterschiedlichen Bereichen des Behälters zweite Materialien mit voneinander abweichenden aufschäumenden Eigenschaften verwendet werden. Dabei sollte in den Bereichen, die hohen mechanischen Belastungen nicht ausgesetzt werden sollen, wie Ventilen und Stopfen, ein zweites Material verwendet werden, dessen Aufschäumverhalten höher als das in den übrigen Bereichen ist. Insbesondere sollte das Aufschäumverhältnis im Bereich zwischen 15 und 25 liegen, d.h., die Volumenzunahme das 15- bis 25-fache des Ausgangsvolumens betragen.

Losgelöst hiervon sollte ansonsten ein aufschäumendes wärmeisolierendes zweites Material verwendet werden, dessen Aufschäumverhältnis zwischen 5 und 15, insbesondere im Bereich von 10 liegt.

Aufschäumverhältnis ist als Volumenvergrößerung bezogen auf das Ausgangsvolumen durch Expansion aufgrund von Wärmeeinwirkung zu verstehen.

Als das aufschäumende thermisch isolierende zweite Material wird insbesondere ein Material verstanden, das aus Graphiten mit thermisch beständigen Bindemitteln, wasserhaltigen Natriumsilikaten oder Epoxidharzen besteht oder diese enthält.

Das aufschäumende thermisch isolierende Material kann an den Innenseiten des Behälters in Form von Platten z. B. aufgeklebt sein, wobei die Platten Dicken zwischen 1 mm und 5 mm aufweisen können, ohne dass hierdurch eine Beschränkung der Erfindung erfolgen soll. Auch kommen Formstücke aus dem aufschäumenden thermisch isolierenden Material in Frage, die mit Formschluss aneinandergereiht sind. Die Formstücke können z. B. angeschraubt oder angenietet sein.

Es besteht auch die Möglichkeit, ein dickflüssiges Material zur Erzielung einer Beschichtung zu verwenden.

Insbesondere ist vorgesehen, dass als das zweite Material ein solches verwendet wird, das bei einer Temperatur aufschäumt, die zumindest 30 °C, insbesondere zumindest 50 °C, über der zulässigen Temperatur des Innenraums des Behälters liegt.

Insbesondere sollte die Aufschäumtemperatur X betragen:

$$A + (B - A) / 4 <= X <= B - (B - A) / 2,$$

wobei

A = maximale Temperatur des Bereichs im Normalbetrieb, der die zu schützende Komponente enthält, und

B = maximal zulässige Temperatur der zu schützenden Komponente unter Unfallbedingungen (Feuer)

sind.

Bei einem Behälter DN30 beträgt z. B. die maximale Temperatur im Normalbetrieb 60 °C und die maximal zulässige Temperatur der zu schützenden Komponenten unter Unfallbedingungen (Feuer) 183 °C. Somit sollte die Temperatur, bei der das aufschäumende, thermisch isolierende zweite Material beginnt aufzuschäumen, zwischen 90 °C und 120 °C liegen.

Bei einem Behälter NCS45 mit A = 100 °C und B = 250 °C sollte die Aufschäumtemperatur betragen 137 °C ≤ X ≤ 175 °C.

Ein Verfahren der eingangs genannten Art zeichnet sich dadurch aus, dass die Schutzeinrichtung lösbar mit dem Behälter verbunden wird, dass die dem Behälter zugewandte Innenseite der Schutzeinrichtung mit einem durch Wärmeeinwirkung aufschäumenden, thermisch isolierenden zweiten Material versehen wird, dass das zweite Material in Form einer Beschichtung oder in Form von Platten oder Formstücke aufgebracht wird, und dass im Falle eines Feuers das zweite Material außerhalb eines unmittelbaren Kontakts zwischen dem Behälter und der Schutzeinrichtung nach dem Aufschäumen den Zwischenraum zwischen dem Behälter und der Schutzeinrichtung vollständig oder im Wesentlichen vollständig ausfüllt. Dabei können in unterschiedlichen Belastungen auszusetzenden Bereichen zwei Materialien mit voneinander abweichenden Aufschäumverhältnissen und/oder Dicken verwendet werden.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:

Fig. 1    eine Ausführungsform einer ersten Anordnung eines Behälters mit Schutzeinrichtung,

Fig. 2    der Behälter gem. Fig. 1 ohne Schutzeinrichtung,

Fig. 3    die Anordnung gemäß Fig. 1 nach mechanischer Belastung,

Fig. 4    eine zweite Ausführungsform einer Anordnung mit Innen- und Außenbehälter und

Fig. 5    die Anordnung gemäß Fig. 4 nach mechanischer Belastung.

In den Fig., in denen grundsätzlich gleiche Elemente mit gleichen Bezugszeichen versehen sind, sind Anordnungen zum Transport von radioaktiven Materialien, wie Uranhexafluorid, dargestellt, die dem prinzipiellen Aufbau bekannter Behälter entsprechen, ohne dass hierdurch die erfindungsgemäße Lehre eingeschränkt werden soll.

Gemeinsam den Anordnungen ist, dass ein die zu transportierenden Materialien aufnehmender Behälter zumindest beim Transport zumindest abschnittsweise von einer Schutzeinrichtung umgeben ist, die sicherstellen soll, dass mechanische Belastungen auftreten können, ohne dass der Behälter selbst in einem Umfang beschädigt wird, dass die Gefahr einer Kontaminierung entstehen könnte. Die Schutzeinrichtung ist lösbar mit dem Behälter verbunden und wird grundsätzlich von dem Behälter entfernt, wenn dieser in einem Lager abgestellt wird.

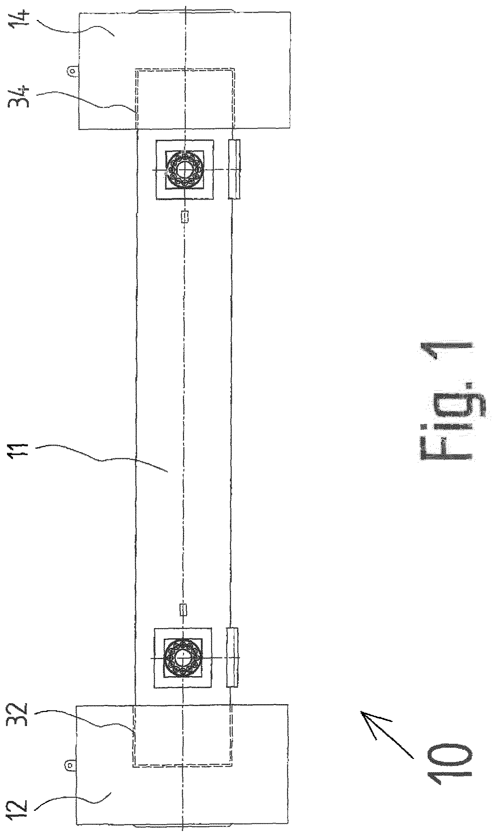

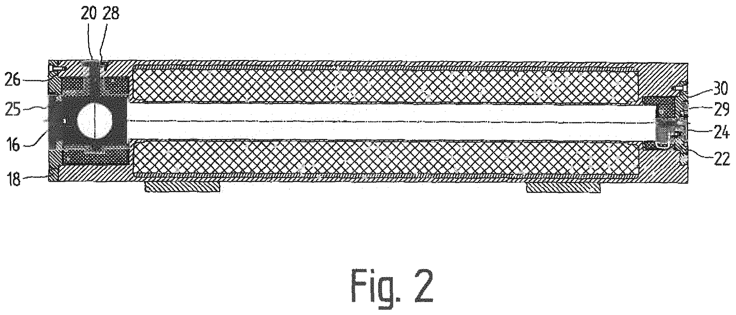

Die Anordnung 10 nach den Fig. 1 bis 3 weist einen Behälter 11 zum Transport von z.B. bestrahlten Kernbrennstoffen auf, der zwei endseitige Stoßdämpfer 12, 14 aufweist, die aus Stahlblechgehäusen mit innenliegenden stoßdämpfenden und thermisch isolierenden Elementen als erstes Material bestehen. Die stoßdämpfenden und thermischen Elemente können bei schweren Behältern aus Holz bestehen, da dieses sowohl ein sehr hohes Energieaufnahmevermögen als auch eine gute thermische Isolierwirkung zeigt.

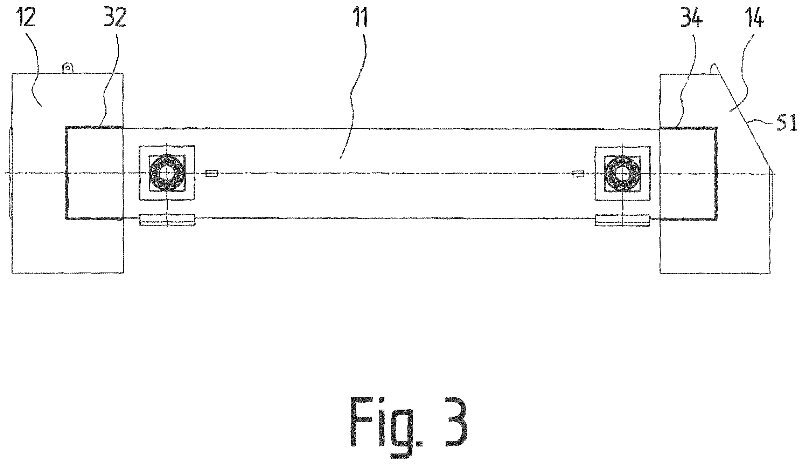

Die thermische Isolierung kann durch mechanische Einwirkungen in ihrer Funktion beeinträchtigt werden. Dies kann z.B. durch Veränderung von Form und Eigenschaften durch mechanische Krafteinwirkungen erfolgen. Durch Verbrennung und/oder Vergasung im Feuer erfolgt gleichfalls eine Funktionsbeeinträchtigung. Die Deformation ergibt sich aus einem Vergleich der Fig. 1 und 3. Im Ausführungsbeispiel ist der in der Zeichnung rechts dargestellte Stoßdämpfer 14 in seinem oberen rechten Eckbereich mechanisch beschädigt (Bereich 51).

Die Stoßdämpfer 12, 14 haben die Aufgabe, Deckel 16, 18, 20, 22, 24 und die in diesen Bereichen verlaufenden Dichtungen 25, 26, 28, 29, 30 vor mechanischen und thermischen Unfallbeanspruchungen umfassend zu schützen.

Zur Montage des jeweiligen Stoßdämpfers 12, 14 muss zwischen dem Behälterkörper im jeweiligen Endbereich und dem Stoßdämpfer 12, 14 selbst ein ausreichender Montagespalt vorgesehen sein.

Erfindungsgemäß ist nun vorgesehen, dass die den Spalt begrenzenden Innenflächen der Stoßdämpfer 12, 14 mit einer Schicht 32, 34 aus aufschäumendem, thermisch isolierendem Material beschichtet sind. Dieses aufschäumende thermisch isolierende Material verschließt im Feuerfall den Spalt und schafft somit eine zusätzliche Isolierschicht, um den jeweiligen Behälterkopf, der die Deckel 16, 18, 20, 22, 24 mit den Dichtungen 25, 26, 27, 29, 30 umfasst, zu schützen. Der Begriff Schicht ist allgemein zu verstehen und schließt auch Platten, Formstücke oder eigensteife Elemente gewünschter Geometrie ein, die aus dem durch Wärmeeinwirkung aufschäumenden, thermisch isolierenden zweiten Material bestehen. In diesem Sinne ist nachstehend das Merkmal Schicht zu verstehen und auszulegen.

Insbesondere werden Platten bzw. Formstücke auf der Innenseite der Stoßdämpfer 12, 14 geklebt, die aus dem durch Wärmeeinwirkung aufschäumenden, thermisch isolierenden Material bestehen.

Die aufzuschäumende Schicht 32, 34 bzw. Platten oder Formstücke sollten eine Dicke z.B. im Bereich zwischen 1 und 3 mm und ein Aufschäumverhältnis im Bereich von 10 aufweisen, so dass Spalten im Bereich zwischen 10 und 30 mm sicher verschlossen werden. Dabei wird ein Material mit einer Aufschäumtemperatur ausgewählt, die einen ausreichenden Abstand zu den am Behälter 11 auftretenden Temperaturen im Normalbetrieb einhalten. Beispielsweise hat der Behälter NCS 45 im Normalbetrieb eine maximale Außentemperatur von ca. 100 °C. Eine geeignete Aufschäumtemperatur läge bei z.B. 130 °C, insbesondere bei 150 °C. Hierdurch ist sichergestellt, dass die Dichtungen 25, 26, 27, 29, 30 über einen erforderlichen Zeitraum gegen temperaturbedingte Beschädigungen geschützt sind.

Durch die mechanische Beschädigung (Bereich 51) wird die thermische Isolierwirkung des Stoßdämpfers 12 negativ beeinflusst. Dies würde z.B. im Falle eines Feuers dazu führen, dass gegebenenfalls die Dichtungen 29, 30 bzw. die Deckel 22, 24 einer Temperaturbeaufschlagung über den nach den vorgeschriebenen Tests vorgegebenen Zeitraum nicht standhalten. Um dies auszuschließen, ist erfindungsgemäß vorgesehen, dass auf der Innenseite der Stoßdämpfer 12, 14 die Schicht 32, 34 aus dem aufschäumenden als zweites Material bezeichneten thermisch isolierenden Material aufgetragen wird bzw. Platten, Formstücke o.ä. auf der Innenseite befestigt wie geklebt werden. Änderungen an der Konstruktion der Stoßdämpfer 12, 14 bedarf es nicht. Es werden Stoßdämpfer 12, 14 üblicher Bauart benutzt, auf deren Innenseite das thermisch isolierende Material aufgebracht wird.

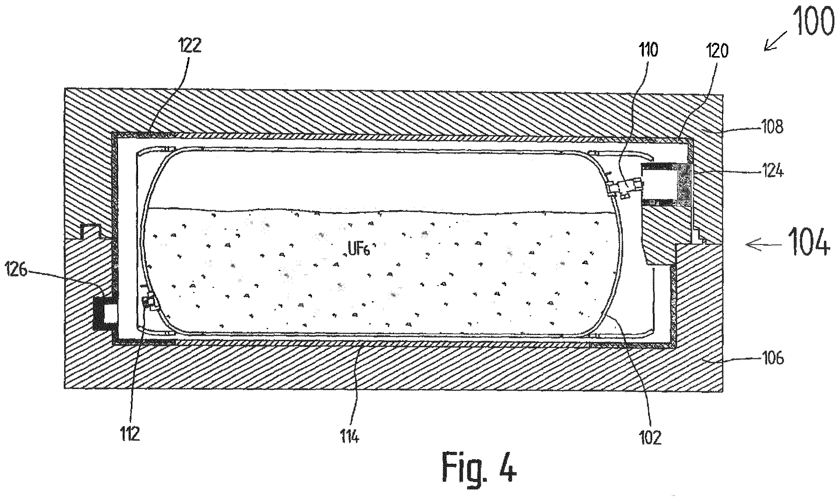

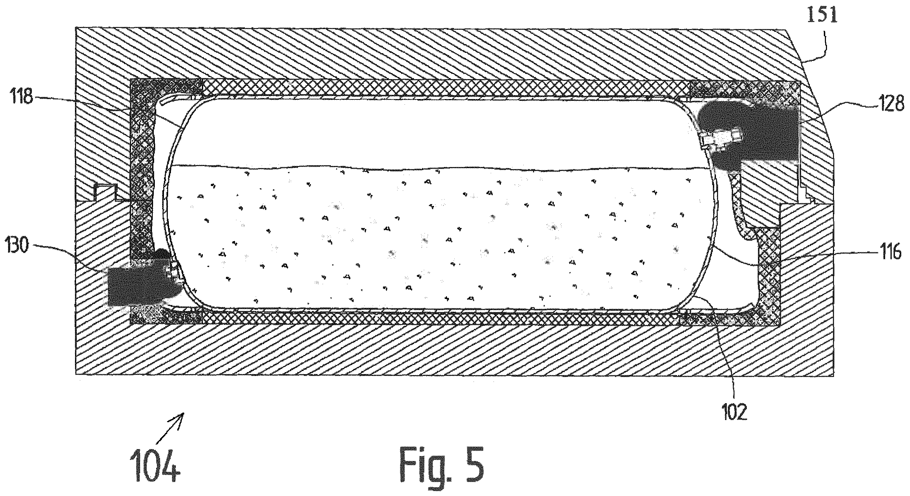

Eine weitere Anordnung ist den Fig. 4 und 5 zu entnehmen, die nicht unter die Lehren der nebengeordneten Ansprüche fällt. Hierbei handelt es sich um eine Anordnung 100, mit der z.B. Uranhexafluorid transportiert werden soll. Die Anordnung 100 umfasst einen Innenbehälter 102, der von einem entfernbaren und zu Transportzwecken benutzten Schutz- oder Außenbehälter 104 umgeben wird, der aus einer unteren Schale 106 und einer mit dieser verbindbaren oberen Schale 108 besteht. Insoweit ist eine Konstruktion gewählt, wie diese der EP 2 335 251 B1 zu entnehmen ist, auf deren Offenbarung verwiesen wird.

In Fig. 4 ist die Anordnung 100 im ordnungsgemäßen Transportzustand und in der Fig. 5 nach einer mechanischen Beschädigung dargestellt. Man erkennt, dass der Außenbehälter 104 in der zeichnerischen Darstellung in seinem oberen rechten Bereich mechanisch beschädigt ist (Bereich 151).

Um ungeachtet dessen bei Auftreten hoher Temperaturen - wie im Falle eines Feuers - sicherzustellen, dass über den nach den Bestimmungen vorgegebenen Zeitraum ein unzulässiger Temperaturanstieg in dem Behälter 102 und insbesondere im Bereich des von einer der Stirnseiten 116 ausgehenden Ventils 110 bzw. eines auf gegenüberliegender Stirnseite 118 vorhandenen Stopfens 112 unterbleibt, ist vorgesehen, dass zumindest abschnittsweise die Innenflächen der Schalen 106, 108 mit einer Schicht aus aufschäumbarem thermisch isolierenden Material als das zweite Material versehen wird. Insbesondere werden auf die Innenfläche Platten, Formstücke o.ä. befestigt wie geklebt, die aus dem Material bestehen.

Im Ausführungsbeispiel ist dem Grunde nach die gesamte oder weitgehend die gesamte Innenfläche des Außenbehälters 104 mit einer aufschäumbaren Schicht 114 versehen, wobei jedoch Bereiche unterschiedliche Aufschäumverhältnisse aufweisen können, wie nachstehend erläutert wird. Auch werden Bereiche ausgelassen, in denen ein unmittelbarer Kontakt zwischen Innen- und Außenbehälter 102, 104 besteht.

Ungeachtet dessen sollte das aufschäumende Material, aus dem die Schicht 114 bzw. Platten, Formstücke bestehen, z.B. ab einer Temperatur von 100 °C beginnen aufzuschäumen, damit ein ausreichender Schäumdruck erzeugt wird, der den Innenbehälter 102 gleichmäßig einschließt; denn die zulässige Maximaltemperatur im Innenraum des Behälters 102 beträgt in etwa 60 °C.

Dabei ist erwähntermaßen vorzugsweise vorgesehen, dass in den Bereichen, in denen ein unmittelbarer Kontakt mit dem Außenbehälter 104 besteht - hierbei handelt es sich um Abstützungen - die Schicht 114 unterbrochen ist. Ansonsten verläuft zwischen dem Innenbehälter 102 und der Innenfläche des Außenbehälters 104 ein Spalt, der montage- und belade- bzw. herstellungsbedingt vorliegt. Üblicherweise beläuft sich der Spalt außerhalb der Abstützungen zwischen 10 und 20 mm.

In diesem Fall sollte die Dicke der Schicht 114 zwischen 1 und 2 mm liegen, so dass bei einem Aufschäumverhältnis im Bereich von 10 der Spalt zwischen Umfangswandung des Innenbehälters 102, also dem in der Zeichnung horizontal verlaufenden Abschnitt, und der Innenseite der Schalen 106, 108 des Außenbehälters 104 vollständig ausgefüllt werden kann.

Im Bereich der Stirnflächen 116, 118, von denen das Ventil 110 bzw. der Stopfen 112 ausgehen, also das Ventil 110 bzw. der Stopfen 112 über der Außenfläche des Behälters 102 vorstehen, ist der Abstand zu der Innenfläche des Außenbehälters 104 größer, so dass in diesem Bereich an der Innenseite der Schalen 106, 108 ein aufschäumbares thermisch isolierendes Material aufgetragen bzw. befestigt sein sollte, das ein höheres Aufschäumverhältnis aufweist. Die entsprechenden Bereiche sind in den Figuren mit den Bezugszeichen 120 und 122 gekennzeichnet.

Das Aufschäumverhältnis kann z.B. im Bereich von 20 oder mehr liegen, so dass bei einer Schichtdicke von 2 bis 5 mm ein Spalt zwischen 40 und 100 mm geschlossen werden kann.

In Weiterbildung ist die im Stirnbereich verlaufende Schicht 120, 122 zusätzlich im Bereich des Ventils 110 bzw. des Stopfens 112 unterbrochen, um mit einem weiteren aufschäumenden thermisch isolierenden Material ausgefüllt zu werden, das ein noch größeres Aufschäumverhältnis aufweist, so dass im Bereich des Ventils 110 bzw. des Stopfens 112 ein geringer Schäumdruck entsteht, wodurch eine Beschädigung des Ventils 110 bzw. des Stopfens 112 unterbunden wird. Der entsprechende Bereich ist in den Figuren mit den Bezugszeichen 124, 126 gekennzeichnet. Man erkennt zusätzlich, dass die Dicke der aufgetragenen Schicht größer als die der Schicht 120, 122 ist, die der Dicke der im horizontal verlaufenden Abschnitt des Behälters 102 entsprechen kann.

Der auf das Ventil 110 bzw. den Stopfen 112 ausgerichtete Bereich 124, 126 des aufschäumenden Materials ist vorzugsweise derart gewählt, dass das Ventil 110 bzw. der Stopfen 112 vollständig von aufgeschäumtem Material eingeschlossen werden kann, wie dies rein prinzipiell der Fig. 5 zu entnehmen ist (Bereich 128, 130). Gleichzeitig wird eine Stoßabsorption erreicht.

Somit ist sichergestellt, dass in diesem Bereich ein Wärmeübergang durch Strahlung bzw. Konvektion unterbunden wird. Auch die Einwirkung von eventuell entstehenden Pyrolysegasen auf das Ventil 110 bzw. den Stopfen 112 kann bei Rissen in der Innenhülle des Außenbehälters 104 wirksam verhindert werden.

Der zeichnerischen Darstellung gemäß Fig. 5 ist zu entnehmen, dass der Zwischenraum zwischen den Stirnflächen 116, 118 des Innenbehälters 102 und dem Außenbehälter 104 von dem aufgeschäumten Material nicht vollständig ausgefüllt ist. Die Schicht- bzw. Materialdicke bzw. das Aufschäumverhältnis der Schicht 120, 122 kann jedoch derart gewählt sein, dass eine vollständige Ausfüllung nicht nur im Bereich des Ventils 110 und des Stopfens 112 erfolgt.

Der zeichnerischen Darstellung gemäß Fig. 4 ist auch zu entnehmen, dass ungeachtet des Beschichtens der Innenfläche des Außenbehälters 104 zwischen der aufschäumenden thermisch isolierenden Schicht 114 und Außenseite des Behälters 102 ein Spalt verläuft.

**Patentansprüche**

1. Anordnung (10, 100) zum Transport von radioaktivem Material, wie bestrahlten Kernbrennstoffen oder Uranhexafluorid, umfassend einen das Material aufnehmenden Behälter (11, 102) und eine diesen zumindest abschnittsweise umgebende Schutzeinrichtung (12, 14, 104), wie Stoßdämpfer oder den Behälter aufnehmenden Schutz- oder Außenbehälter, wobei vorzugsweise in der Schutzeinrichtung und/oder zwischen dieser und dem Behälter ein thermisch-isolierendes erstes Material vorhanden ist,
wobei zwischen dem Behälter (11, 102) und der lösbar mit dem Behälter verbundenen Schutzeinrichtung (12, 14, 104) zumindest bereichsweise ein mit der Schutzeinrichtung verbundenes durch Wärmeeinwirkung aufschäumendes, thermisch isolierendes zweites Material (32, 34, 114, 120, 122, 124, 126) vorhanden ist, wobei das zweite Material eine Beschichtung ist oder aus Platten oder Formstücken besteht und wobei das zweite Material außerhalb eines unmittelbaren Kontakts zwischen dem Behälter und der Schutzeinrichtung (12, 14) nach dem Aufschäumen den Zwischenraum zwischen dem Behälter und der Schutzeinrichtung vollständig oder im Wesentlichen vollständig ausfüllt.

2. Anordnung nach Anspruch 1,
**dadurch gekennzeichnet,**
**dass** die Platten oder Formstücke durch Kleben, Schrauben und/oder Nieten fixiert sind.

3. Anordnung nach Anspruch 1 oder 2,
**dadurch gekennzeichnet,**
**dass** das zweite Material (32, 34, 114, 120, 122, 124, 126), auf der die Innenseite des den Behälter (11, 102) abdeckenden Bereichs der Schutzeinrichtung (12, 14, 104) aufgebracht ist.

4. Anordnung nach zumindest einem der vorhergehenden Ansprüche,
**dadurch gekennzeichnet,**
**dass** der Behälter (11, 102) Bereiche mit voneinander abweichender mechanischer Belastbarkeit aufweist und dass entsprechenden Bereichen zugeordnete aufschäumende zweite Materialien unterschiedliche Aufschäumverhalten aufweisen.

5. Anordnung nach zumindest einem der vorhergehenden Ansprüche,
**dadurch gekennzeichnet,**
**dass** das zweite Material (32, 34, 114, 120, 122, 124, 126) in den Bereichen auf der Innenseite der Schutzeinrichtung (12, 14, 104) vorgesehen ist, in denen ein Spalt, insbesondere Montage- oder Beladespalt oder herstellungsbedingter Spalt, zwischen dem Behälter (11, 102) und der Schutzeinrichtung (12, 14, 104) verläuft.

**6.** Anordnung nach zumindest einem der vorhergehenden Ansprüche,
**dadurch gekennzeichnet,**
**dass** zwischen dem zweiten Material (32, 34, 114, 120, 122, 124, 126) und dem Behälter (11, 102) ein Spalt verläuft.

**7.** Anordnung nach zumindest einem der vorhergehenden Ansprüche,
**dadurch gekennzeichnet,**
**dass** das aufschäumende thermisch isolierende zweite Material (32, 34, 114, 120, 122, 124, 126) aus Graphit mit thermisch beständigem Bindemittel, wasserhaltigem Natriumsilikat oder Epoxidharz besteht oder dieses enthält.

**8.** Anordnung nach zumindest einem der vorhergehenden Ansprüche, wobei der Behälter (102) zumindest ein Ventil (110) und/oder einen Stopfen (112) aufweist, **dadurch gekennzeichnet,**
**dass** im Bereich des Ventils (110) und/oder des Stopfens (112) ein aufschäumendes thermisch isolierendes zweites Material (114, 120, 122, 124, 126) vorhanden ist, dessen Aufschäumverhalten derart ausgelegt ist, dass das Ventil (110) und/oder der Stopfen (112) nach dem Aufschäumen des zweiten Materials von einer stoßabsorbierenden Umhüllung umgeben ist.

**9.** Anordnung nach zumindest einem der vorhergehenden Ansprüche,
**dadurch gekennzeichnet,**
**dass** das zweite Material (32, 34, 114, 120, 122, 124, 126) beabstandet oder zumindest abschnittsweise beabstandet zu dem Behälter (11, 102) bzw. dessen Außenseite verläuft.

**10.** Anordnung nach zumindest einem der vorhergehenden Ansprüche,
**dadurch gekennzeichnet,**
**dass** das zweite Material als Schicht, in Form einer Platte oder als Formstück auf der dem Behälter (11, 102) zugeordneten Fläche der lösbar mit dem Behälter verbundenen Schutzeinrichtung (12, 14, 104) aufgebracht, wie geklebt, geschraubt, genietet ist.

**11.** Verfahren zur Erhöhung des Brandschutzes einer Anordnung (10, 100) zum Transport von radioaktivem Material, wie bestrahlten Kernbrennstoffen oder Uranhexafluorid, umfassend einen das Material aufnehmenden Behälter (11, 102) und eine diesen zumindest abschnittsweise umgebende Schutzeinrichtung (12, 14, 104), wie Stoßdämpfer oder den Behälter aufnehmenden Schutz- oder Außenbehälter, wobei vorzugsweise in der Schutzeinrichtung und/oder zwischen dieser und dem Behälter ein thermisch-isolierendes erstes Material vorhanden ist, wobei die Schutzeinrichtung (12, 14, 104) lösbar mit dem Behälter verbunden wird, die dem Behälter (11, 102) zugewandte Innenseite der Schutzeinrichtung (12, 14, 104) mit einem durch Wärmeeinwirkung aufschäumenden, thermisch isolierenden zweiten Material (32, 34, 114, 120, 122, 124, 126) versehen wird, wobei das zweite Material in Form einer Beschichtung, in Form von Platten oder Formstücken aufgebracht wird, und wobei das zweite Material außerhalb eines unmittelbaren Kontakts zwischen dem Behälter und der Schutzeinrichtung (12, 14) nach dem Aufschäumen den Zwischenraum zwischen dem Behälter und der Schutzeinrichtung vollständig oder im Wesentlichen vollständig ausfüllt.

**12.** Verfahren nach Anspruch 11,
**dadurch gekennzeichnet,**
**dass** Bereiche der Innenseite der Schutzeinrichtung (12, 14, 104) mit dem durch Wärmeeinwirkung aufschäumenden, thermisch isolierenden zweiten Material (32, 34, 114, 120, 122, 124, 126) mit voneinander abweichendem Aufschäumverhältnis und/oder mit voneinander abweichenden Dicken versehen oder befestigt wie beschichtet, geklebt werden.

**13.** Verfahren nach Anspruch 11 oder 12,
**dadurch gekennzeichnet,**
**dass** als das durch Wärmeeinwirkung aufschäumende, thermisch isolierende zweite Material (32, 34, 114, 120, 122, 124, 126) ein solches verwendet wird, das bei einer Temperatur T2 aufschäumt, die zumindest 30 °C, insbesondere zumindest 50 °C, über der zulässigen Temperatur im Innenraum des Behälters (11, 102) liegt, wobei vorzugsweise das durch Wärmeeinwirkung aufschäumende, thermisch isolierende zweite Material bei einer Aufschäumtemperatur X thermisch aktiviert wird mit

$$A + (B - A) / 4 <= X <= B - (B - A) / 2,$$

wobei

A = maximale Temperatur des Bereichs im Normalbetrieb, der die zu schützende Komponente enthält,
B = maximal zulässige Temperatur der zu schützenden Komponente unter Unfallbedingungen (Feuer)

sind.

**14.** Verfahren nach einem der Ansprüche 11 bis 13,
**dadurch gekennzeichnet,**
**dass** die Beschichtung durch dickflüssiges Auftragen und die Platten und/oder die Formstücke durch Kleben, Schrauben oder Nieten aufgebracht werden.

**Claims**

1. An arrangement (10, 100) for transporting radioactive material such as irradiated nuclear fuels or uranium hexafluoride, comprising a container (11, 102) holding the material and a protective device (12, 14, 104) surrounding the container at least in some sections, such as a shock absorber or protective or outer container holding the container, wherein a thermally insulating first material is provided preferably inside the protective device and/or between the latter and the container, wherein a thermally insulating second material (32, 34, 114, 120, 122, 124, 126), foaming under the effect of heat and connected to the protective device is provided at least in some regions between the container (11, 102) and the protective device (12, 14, 104) detachably connected to the container, wherein the second material is a coating or consists of panels or shaped pieces and wherein the second material, outside a direct contact between the container and the protective device (12, 14), completely or substantially completely fills the cavity between the container and the protective device after foaming.

2. The arrangement according to claim 1,
**characterized in**
**that** the panels or shaped pieces are fixed by glueing, bolting and/or riveting.

3. The arrangement according to claim 1 or 2,
**characterized in**
**that** the second material (32, 34, 114, 120, 122, 124, 126) is attached to the inner face of that region of the protective device (12, 14, 104) covering the container (11, 102).

4. The arrangement according to at least one of the preceding claims,
**characterized in**
**that** the container (11, 102) has regions of differing mechanical resistance, and in that foaming second materials associated with corresponding regions have different foaming properties.

5. The arrangement according to at least one of the preceding claims,
**characterized in**
**that** the second material (32, 34, 114, 120, 122, 124, 126) is provided in those regions on the inner face of the protective device (12, 14, 104) in which a gap, in particular a fitting or loading gap or a manufacturing-related gap, extends between the container (11, 102) and the protective device (12, 14, 104).

6. The arrangement according to at least one of the preceding claims,
**characterized in**
**that** a gap extends between the second material (32, 34, 114, 120, 122, 124, 126) and the container (11, 102).

7. The arrangement according to at least one of the preceding claims,
**characterized in**
**that** the foaming and thermally insulating second material (32, 34, 114, 120, 122, 124, 126) consists of or contains graphite with thermally resistant bonding agent, aqueous sodium silicate or epoxy resin.

8. The arrangement according to at least one of the preceding claims, wherein the container (102) has at least one valve (110) and/or one plug (112),
**characterized in**
**that** a foaming and thermally insulating second material (114, 120, 122, 124, 126), whose foaming properties are designed such that the valve (110) and/or the plug (112) is/are surrounded by a shock-absorbing envelope after foaming of the second material, is provided in the region of the valve (110) and/or of the plug (112).

9. The arrangement according to at least one of the preceding claims,
**characterized in**
**that** the second material (32, 34, 114, 120, 122, 124, 126) extends at a distance from or at least in some sections at a distance from the container (11, 102) or its outer face.

10. The arrangement according to at least one of the preceding claims,
**characterized in**
**that** the second material is attached, such as glued, bolted or riveted, as a coating, in the form of a panel or as a shaped piece, to that surface associated with the container (11, 102), of the protective device (12, 14, 104) detachably connected to the container.

11. A method for increasing the fire protection of an arrangement (10, 100) for transporting radioactive material such as irradiated nuclear fuels or uranium hexafluoride, comprising a container (11, 102) holding the material and a protective device (12, 14, 104) surrounding the container at least in some sections such as a shock absorber or protective or outer container holding the container, wherein a thermally insulating first material is provided preferably inside the protective device and/or between the latter and the container, wherein the protective device (12, 14, 104) is detachably connected to the container, the inner face of the protective device (12, 14, 104) facing the container (11, 102) is provided with a thermally insulating second material (32, 34, 114, 120, 122, 124, 126), foaming under the effect of heat, wherein the second material is attached in the form of a coating or in the form of panels or shaped pieces, and wherein the second material, outside a direct contact between the container and the protective device (12, 14), completely or substantially completely fills the cavity between the container and the protective device after foaming.

12. The method according to claim 11,
**characterized in**
**that** regions of the inner face of the protective device (12, 14, 104) are provided with the thermally insulating second material (32, 34, 114, 120, 122, 124, 126), foaming under the effect of heat and having differing foaming ratios and/or differing thicknesses, or fastened such as by coating or glueing.

13. The method according to claim 11 or 12,
**characterized in**
**that** the thermally insulating second material (32, 34, 114, 120, 122, 124, 126) used, foaming under the effect of heat, is one which foams at a temperature T2 which is at least 30 °C, in particular at least 50 °C, above the temperature permissible in the interior of the container (11, 102), wherein the thermally insulating second material, foaming under the effect of heat, is preferably thermally activated at a foaming temperature X with

$$A + (B - A) / 4 <= X <= B - (B - A) / 2,$$

where

A = maximum temperature in normal operation of the region containing the component to be protected,
B = maximum permissible temperature of the component to be protected under accident conditions (fire).

14. The method according to any of claims 11 to 13,
**characterized in**
**that** the coating is attached by application when viscous, and the panels and/or the shaped pieces are attached by glueing, bolting or riveting.

**Revendications**

1. Agencement (10, 100) pour transporter des matériaux radioactifs, tels que combustibles nucléaires irradiés ou hexafluorure d'uranium, comprenant un conteneur (11, 102) accueillant les matériaux et un dispositif de protection (12, 14, 104), tel un amortisseur de chocs ou le conteneur protecteur ou extérieur accueillant le conteneur, entourant au moins partiellement celui-ci, sachant que de préférence, un premier matériau thermiquement isolant est présent dans le dispositif de protection et/ou entre celui-ci et le conteneur,
sachant qu'il existe, au moins partiellement, un second matériau (32, 34, 114, 120, 122, 124, 126) thermiquement isolant, moussant sous l'effet de la chaleur, relié au dispositif de protection, entre le conteneur (11, 102) et le dispositif de protection (12, 14, 104) relié au conteneur de manière détachable, sachant que le second matériau est un revêtement ou est constitué de plaques ou de pièces moulées, et sachant que le second matériau en dehors d'un contact direct entre le conteneur et le dispositif de protection (12, 14) remplit entièrement ou essentiellement entièrement l'espace intermédiaire entre le conteneur et le dispositif de protection, après le moussage.

2. Agencement selon la revendication 1,
**caractérisé en ce**
**que** les plaques ou formes moulées sont fixées par collage, vissage et/ou rivetage.

3. Agencement selon la revendication 1 ou 2,
**caractérisé en ce**
**que** le second matériau (32, 34, 114, 120, 122, 124, 126) est posé sur la face intérieure de la zone du dispositif de protection (12, 14, 104), recouvrant le conteneur (11, 102).

4. Agencement selon au moins l'une des revendications précédentes,
**caractérisé en ce**
**que** le conteneur (11, 102) présente des parties dont la résistance aux contraintes mécaniques varie de l'une à l'autre et que des seconds matériaux moussants, associés à des parties correspondantes présentent différents comportements de moussage.

5. Agencement selon au moins l'une des revendications précédentes,
**caractérisé en ce**
**que** le second matériau (32, 34, 114, 120, 122, 124, 126) est prévu dans les parties situées sur la face intérieure du dispositif de protection (12, 14, 104) dans lesquelles une fente, notamment une fente de montage ou de chargement ou une fente due à la fabrication, s'étend entre le conteneur (11, 102) et le dispositif de protection (12, 14, 104).

6. Agencement selon au moins l'une des revendications précédentes,
**caractérisé en ce**
**qu'**une fente s'étend entre le second matériau (32, 34, 114, 120, 122, 124, 126) et le conteneur (11, 102).

**7.** Agencement selon au moins l'une des revendications précédentes,
**caractérisé en ce**
**que** le second matériau (32, 34, 114, 120, 122, 124, 126) moussant, thermiquement isolant est constitué de graphite avec liant thermiquement résistant, de silicate de sodium aqueux ou de résine époxy ou en contient.

**8.** Agencement selon au moins l'une des revendications précédentes, sachant que le conteneur (102) présente au moins une soupape (110) et/ou un obturateur (112),
**caractérisé en ce**
**qu'**il existe dans la zone de la soupape (110) et/ou de l'obturateur (112), un second matériau (114, 120, 122, 124, 126) moussant, thermiquement isolant dont le comportement de moussage est conçu de telle sorte que la soupape (110) et/ou l'obturateur (112) est entouré(e) d'une enveloppe absorbant les chocs, après le moussage du second matériau.

**9.** Agencement selon au moins l'une des revendications précédentes,
**caractérisé en ce**
**que** le second matériau (32, 34, 114, 120, 122, 124, 126) est écarté ou au moins partiellement écarté du conteneur (11, 102) ou de son côté extérieur.

**10.** Agencement selon au moins l'une des revendications précédentes,
**caractérisé en ce**
**que** le second matériau est posé en couche, sous la forme d'une plaque ou d'une pièce moulée, sur la surface associée au conteneur (11, 102) du dispositif de protection (12, 14, 104) relié au conteneur de manière détachable, c'est-à-dire collé, vissé ou riveté.

**11.** Procédé pour renforcer la protection contre le feu d'un agencement (10, 100) pour transporter des matériaux radioactifs, tels que combustibles nucléaires irradiés ou hexafluorure d'uranium, comprenant un conteneur (11, 102) accueillant le matériau et un dispositif de protection (12, 14, 104), tel un amortisseur de chocs ou le conteneur protecteur ou extérieur accueillant le conteneur, entourant au moins partiellement celui-ci, sachant que de préférence, un premier matériau thermiquement isolant est présent de préférence dans le dispositif de protection et/ou entre celui-ci et le conteneur, sachant que le dispositif de protection (12, 14, 104) est relié au conteneur de manière détachable,
que la face intérieure du dispositif de protection (12, 14, 104), tournée vers le conteneur (11, 102) est pourvue d'un second matériau (32, 34, 114, 120, 122, 124, 126) thermiquement isolant, moussant sous l'effet de la chaleur, sachant que le second matériau est appliqué sous forme de revêtement, sous forme de plaques ou de pièces moulées, et sachant que le second matériau en dehors d'un contact direct entre le conteneur et le dispositif de protection (12, 14) remplit entièrement ou essentiellement entièrement l'espace intermédiaire entre le conteneur et le dispositif de protection.

**12.** Procédé selon la revendication 11,
**caractérisé en ce**
**que** des parties de la face intérieure du dispositif de protection (12, 14, 104) sont pourvues du second matériau (32, 34, 114, 120, 122, 124, 126) thermiquement isolant, moussant sous l'effet de la chaleur avec un taux de moussage variant et/ou des épaisseurs variant entre elles, ou sont fixées à celui-ci, à savoir recouvertes, collées avec celui-ci.

**13.** Procédé selon la revendication 11 ou 12,
**caractérisé en ce**
**qu'**est utilisé comme second matériau (32, 34, 114, 120, 122, 124, 126) thermiquement isolant, moussant sous l'effet de la chaleur, un matériau qui mousse à une température T2 située au moins 30 °C, notamment au moins 50 °C au-dessus de la température admissible dans l'espace intérieur du conteneur (11, 102), sachant que de préférence, le second matériau thermiquement isolant, moussant sous l'effet de la chaleur est activé thermiquement à une température de moussage X telle que

$$A + (B - A) / 4 <= X <= B - (B - A) / 2,$$

sachant que

> A = température maximale en fonctionnement normal de la partie qui comprend le composant à protéger,
> B = température maximale admissible du composant à protéger en cas d'accident (feu).

**14.** Procédé selon l'une des revendications 11 à 13,
**caractérisé en ce**
**que** le revêtement est posé par application épaisse, et que les plaques et/ou les pièces moulées sont posées par collage, vissage ou rivetage.

Fig. 1

EP 3 455 860 B2

Fig. 2

**Fig. 3**

Fig. 4

Fig. 5

**IN DER BESCHREIBUNG AUFGEFÜHRTE DOKUMENTE**

**In der Beschreibung aufgeführte Patentdokumente**

- EP 2335251 B1
- US 20030052036 A1
- DE 69902774 T2
- DE 4004037 C1
- DE 1514623 A
- RU 2253160 C1
- DE 1514616 A
- US 20080073601 A1
- US 3669299 A
- CN 204760052
- CN 203503315
- EP 1760007 A1
- US 3391280 A